# EUROPEAN PATENT APPLICATION

(11) **EP 2 352 020 A2**
(43) Date of publication of application: **03.08.2011**
(21) Application number: 11151413.9
(22) Date of filing: 19.01.2011
(51) Int. Cl.: G01N 27/447

(54) **Method for analyzing sample by electrophoresis and use of the same**

(30) Priority: 19.01.2010 JP 2010009364
(71) Applicant: Arkray, Inc., Minami-ku Kyoto-shi Kyoto 601-8045 (JP)
(72) Inventor: Yonehara, Satoshi, Kyoto 601-8045 (JP); Nakayama, Yusuke, Kyoto 601-8045 (JP)
(74) Representative: Golding, Louise Ann

(57) **Abstract**

A sample analysis method with improved separation accuracy is provided. The method relates to a method for analyzing a sample by electrophoresis using an electrophoresis apparatus provided with a channel and a sample reservoir formed in the channel. The method includes: placing the sample in the sample reservoir of the electrophoresis apparatus with the channel being filled with an electrophoresis running buffer; and performing electrophoresis by applying a voltage to both ends of the channel. The concentration of at least one of a) and b) is set to be approximately the same between the sample and the electrophoresis running buffer wherein a) and b) are defined as follows:
a) an ion that moves in the same direction as an analyte in the sample by the electrophoresis and has a smaller degree of mobility than the analyte, and
b) an ion that moves in the opposite direction to the analyte.

## Description

The present invention relates to a method for analyzing a sample by electrophoresis and to the use of the same.

Electrophoresis is well known as a way to separate/analyze an analyte, such as a variety of compounds, nucleic acids and proteins, with high accuracy by utilizing an electric field. Since electrophoresis allows separation of substances based on their charge, molecular weight, stereo structure, etc., it is widely used.

There are various types of electrophoresis depending on the presence or absence of a support and the type of a support, among others. For example, polyacrylic amide electrophoresis, agarose gel electrophoresis, starch gel electrophoresis, filter paper electrophoresis, cellulose acetate membrane electrophoresis, electrochromatography, free flow electrophoresis, and capillary electrophoresis are known. For example, it is proposed to use agarose gel electrophoresis to separate glycated hemoglobin using an agarose gel to which sulfonated polysaccharides such as chondroitin sulfate are added (JP H05-133938 A). It is proposed to use capillary electrophoresis to analyze a sample in a short time by electrokinetic chromatography as one type of capillary electrophoresis and incorporating a polyanion, such as chondroitin sulfate, or polycation in a electrophoresis buffer solution (Japanese Patent No. 3,124,993). A microchip electrophoresis apparatus is proposed to reduce the size of analysis apparatus (Japanese Patent Nos. 2,790,067 and 3,656,165).

A problem with a microchip electrophoresis apparatus is that a channel (separation length) used in separating a sample becomes smaller in length compared with a conventional apparatus, resulting in deterioration of separation capability. Tb solve this problem, a variety of solutions have been proposed, including increasing the sample injection capacity and the separation length, condensing an analyte within the channel prior to the separation, combining a microchip electrophoresis apparatus with the base stacking method (Kim et al., J. Chromatgr. A, 1064, 121-127, 2005), and using a different buffer solution from that used for the preparation of a sample as an electrophoresis buffer solution (JP 2009-74811A). However, these conventional methods may not be adequate in terms of analyzing a sample with high accuracy.

In another method, it is proposed to analyze a sample using an electrophoresis chip provided with a sample reservoir and a recovery reservoir being in communication with each other via a channel (WO 2008/136465). Specific details of this method are as follows. After supplying a sample to a sample introduction reservoir of the electrophoresis chip, a potential difference is created between the sample introduction reservoir and the recovery reservoir, causing introduction of the sample from the sample introduction reservoir and separation of the sample. Further, it has been proposed to separate bilirubin in plasma by this method (Nie Z et al., Electrophoresis, 29(9): 1924-31, 2008).

However, a further technique for analyzing a sample with high accuracy is desired.

The present invention provides a new method for an improved separation capability to an electrophoretic sample analysis by a frontal analysis where a sample is introduced and components of the sample are separated by application of a voltage to a channel.

The present invention provides a method for analyzing a sample by electrophoresis using an electrophoresis apparatus comprising a channel and a sample reservoir formed in the channel. The method includes: adding the sample to the sample reservoir of the electrophoresis apparatus where the channel contains an electrophoresis running buffer and performing electrophoresis by applying a voltage to both ends of the channel. The concentration of at least one of a) and b) is set to be approximately the same between the sample and the electrophoresis running buffer where a) and b) are defined as follows:
a) an ion that moves in the same direction as an analyte in the sample by the electrophoresis and has a smaller degree of mobility than the analyte, and
b) an ion that moves in the opposite direction to the analyte.

FIG. 1A is a conceptual diagram showing a configuration of an exemplary electrophoresis chip that can be used in the method of the present invention, and FIG. 1B is a cross-sectional view of the electrophoresis chip shown in FIG. 1A along the line I-I.
FIG. 2 is a graph showing exemplary results of Example 1.
FIG. 3 is a graph showing exemplary results of Comparative Example 1.
FIG. 4 is a graph showing exemplary results of Example 2.
FIG. 5 is a graph showing exemplary results of Comparative Example 2.
FIG. 6 is a graph showing exemplary results of Example 3.
FIG. 7 is a graph showing exemplary results of Example 7.
FIG. 8 is a graph showing exemplary results of Comparative Example 3.
FIG. 9 is a graph showing exemplary results of Example 8 and Comparative Example 4.

Viewed from one aspect, the present invention relates to a method for analyzing a sample by electrophoresis using an electrophoresis apparatus comprising a channel and a sample reservoir formed in the channel. The method includes: adding the sample to the sample reservoir of the electrophoresis apparatus where the channel contains an electrophoresis running buffer; and performing electrophoresis by applying a voltage to both ends of the channel. The concentration of at least one of a) and b) is set to be approximately the same between the sample and the electrophoresis running buffer; where a) and b) are defined as follows:
a) an ion that moves in the same direction as an analyte in the sample by the electrophoresis and has a smaller degree of mobility than the analyte, and
b) an ion that moves in the opposite direction to the analyte.

With the present invention, the analyte separation capability of an electrophoretic sample analysis by a frontal analysis method can be improved. Further, with the present invention, an analysis can be preferably conducted in a shorter time than conventional methods. Moreover, the method of the present invention is particularly suitable for a sample analysis using a small-size capillary electrophoresis chip, and more preferably for a sample analysis by frontal analysis Continuous Capillary Electrophoresis using a microchip electrophoresis apparatus.

The inventors have further improved the separation capability of a method in which a sample is introduced from the sample reservoir and components of the sample are separated by application of a voltage as in WO 2008/136465, i.e., a method in which electrophoresis is performed while sampling continuously. During the course of this process, the inventors have focused their attention on the ion distribution in the channel. Specifically, they have found that ions in a sample, which hardly affect the separation when a trace amount of a sample is injected into an electrophoresis running buffer and are thus ignorable, could affect the accuracy of separation when performing electrophoresis while sampling continuously. This problem becomes particularly noticeable when a small-size electrophoresis apparatus is used, i.e., when the length used in separating a sample (separation length) is small as in an electrophoresis chip. More specifically, the inventors have found that when the separation length is small, an increase in the peak width resulting from variations in the charge of the sample due to the ion distribution bias becomes noticeable, thereby causing deterioration of the separation capability

The present invention is based upon the following findings. In a method for analyzing a sample by electrophoresis that includes: introducing the sample into a channel from a sample reservoir by applying a voltage to both ends of the channel; and performing electrophoresis on the sample, by setting the concentration of at least one of a) and b) to be approximately the same between the sample and the electrophoresis running buffer, the analyte separation capability can be improved and the accuracy of separation can be improved even when the separation length is small; where a) and b) are defined as follows:
a) an ion that moves in the same direction as an analyte in the sample by electrophoresis and has a smaller degree of mobility than the analyte, and
b) an ion that moves in the opposite direction to the analyte.

Although it remains uncertain why the analysis method of the present invention provides an improvement in the separation capability, the following can be presumed. In a frontal analysis, a width where an electrophoresis running buffer and a sample are in contact with each other becomes a peak width. Normally, the peak width is increased by 1) variations in the charge of the sample, 2) scattering of components of the sample caused by temperature or Brownian movement, 3) a nonuniform flow of the sample, and 4) a meniscus at the time of introducing the sample. In particular, the most crucial reason for the increase of the peak width in the case of electrophoresis with a small separation length is considered to be 1) variations in the charge of the sample. In the method of the present invention, since the concentration of at least one of the earlier defined a) and b) is set to be approximately the same, and preferably substantially the same between the sample and the electrophoresis running buffer, variations in the charge of the sample are suppressed. Because an increase in the peak width can be suppressed as a result, the separation capability can be improved. Note that these are only presumptions and the present invention is not limited to these mechanisms.

In this specification, the term "electrophoresis" refers to a method for separating substances utilizing differences in their migration speed (mobility) within an electric field resulting from their size or charge. The method of the present invention can be applied to analysis methods using various types of electrophoresis, such as polyacrylic amide electrophoresis, agarose gel electrophoresis, starch gel electrophoresis, filter paper electrophoresis, cellulose acetate membrane electrophoresis, electrokinetic chromatography, free flow electrophoresis, and capillary electrophoresis. In particular, the present invention is suited for capillary electrophoresis such as electrokinetic chromatography, capillary zone electrophoresis, micellar electrokinetic chromatography, and capillary gel electrophoresis, preferably for electrokinetic chromatography and micellar electrokinetic chromatography, and particularly preferably for capillary electrophoresis using an electrophoresis microchip.

In this specification, the term "mobility" refers to the speed at which a substance moves in an electric field created in the channel as a result of applying a voltage to both ends of the channel. The mobility is determined in accordance with, for example, the charge, size, and shape of the substance as well as the environment within the channel (e.g., the components of a liquid in the channel, the pH of the liquid and an electroosmotic flow in the channel). In this specification, the term "electroosmotic flow" refers to, for example, in the case of performing capillary electrophoresis using a channel including an inner wall with a negative charge, a flow that is created by the negative charge of the inner wall of the channel and directed to the cathode from the anode side.

In this specification, the term "ion" refers to a component having a negative charge and a component having a positive charge contained in an electrophoresis running buffer and/or a sample to such a degree that they may have an effect on the separation capability Examples of such components include a buffer agent, an acidic substance, a weak electrolyte, a basic substance, a strong electrolyte, protein, and other components having a positive or negative charge.

In this specification, "setting the concentration of at least one of the 'ion that moves in the same direction as an analyte by electrophoresis and has a smaller degree of mobility than the analyte' and the 'ion that moves in the opposite direction to the analyte' to be approximately the same between the sample and the electrophoresis running buffer" includes setting the electrophoresis running buffer and the sample to contain, in approximately the same concentration, ions having approximately the same degree of mobility. For example, it is preferable to set the concentrations of the component having a negative charge and the component having a positive charge in the sample and the concentrations of the corresponding components in the electrophoresis running buffer to be approximately the same, and more preferably its concentrations to be substantially the same. Further, when there are "a plurality of ion species that move in the same direction as an analyte by electrophoresis and have a smaller degree of mobility than the analyte" and "a plurality of ion species that move in the opposite direction to the analyte" in the sample and/or the electrophoresis running buffer, the concentrations of at least one of the former ion species and at least one of the latter ion species may be set to be approximately the same between the sample and the electrophoresis running buffer. Preferably, the concentrations of all of the former ion species and the latter ion species are approximately the same between the sample and the electrophoresis running buffer.

The scope of the term "approximately the same concentration" includes both the same concentration and a difference in concentration such that there is approximately no effect on the separation capability This difference in concentration is determined appropriately in accordance with the length used for the separation of a sample. When the separation length (the distance between the end of the sample reservoir on the channel side and the analyzing portion) is about 10 to about 30 mm and the difference in concentration between an ion contained in the electrophoresis running buffer and the corresponding ion in the sample is more than about -10 mmol/L and less than about +10 mmol/L, it can be considered that the concentrations are approximately the same. In this case, the difference is preferably in a range of about -5 mmol/L to about +5 mmol/L. Similarly, when the separation length is about 10 to about 30 mm and the difference in concentration between the ion contained in the electrophoresis running buffer and the corresponding ion in the sample is more than about -10 wt% and less than about +10 wt%, it can be considered that the concentrations are approximately the same. In this case, the difference is preferably in a range of about -5 wt% to about +5 wt%. The species and concentration of each ion in the electrophoresis running buffer and the sample can be determined by inductively coupled plasma-atomic emission spectroscopy, ion chromatography, and coulometric titration or with an electric conductivity meter.

Further, ions having approximately the same degree of mobility include those having the same degree of mobility or those with a difference in mobility to such a degree that it has approximately no effect on the separation capability. The difference in mobility to such a degree that it has approximately no effect on the separation capability is determined appropriately in accordance with, for example, the length used for the separation of a sample. For example, when the separation length (the distance between the end of the sample reservoir on the channel side and the analyzing portion) is about 20 to about 30 mm, the difference in mobility between an ion contained in the electrophoresis running buffer and the corresponding ion in the sample is ± 5%, and preferably ± 2%.

For example, it is possible to determine whether or not an ion in the electrophoresis running buffer and/or the sample (hereinafter referred also to as a "target ion") corresponds to the "ion that moves in the same direction as an analyte by electrophoresis and has a smaller degree of mobility than the analyte (i.e., the ion of a))" as follows. First, two kinds of electrophoresis running buffers with different target ion concentrations are prepared, and they are filled in the anode side and the cathode side of a capillary electrophoresis apparatus, respectively. In a capillary connecting the anode side and the cathode side, the electrophoresis running buffer filled in the cathode side is filled when the target ion is a cation and that filled in the anode side is filled when the target ion is an anion. By applying a voltage to the anode and the cathode in this state, the target ion moves within the capillary and the concentration of the ion in the capillary varies. The variations in the concentration of the ion are detected by, for example, measuring the specific absorption of the target ion or variations in the current value. This allows the determination of mobility of the target ion in the capillary, and whether or not the target ion corresponds to the ion of a) can be determined by comparing the determined mobility of the target ion with the mobility of the analyte. When preparing the electrophoresis running buffers used for determining the mobility, a counter ion to the target ion may be added to the running buffers. As the counter ion to be added to the running buffers, an ion having a higher degree of mobility than the target ion is preferable, such as Na, K and Cl.

Further, whether or not the target ion corresponds to the "ion that moves in the opposite direction to the analyte (the ion of b))" can be determined as follows. When the target ion is an anion and the analyte is a cation, it can be concluded that the target ion corresponds to the ion of b). In contrast, when the target ion is a cation and the analyte is an anion, it can be concluded that the target ion corresponds to the ion of b).

In this specification, examples of the "analyte" include proteins, substances in living body, and substances in blood. Specific examples of proteins include hemoglobin, albumin and globulin. Examples of hemoglobin include glycated hemoglobin, variant hemoglobin, minor hemoglobin, and modified hemoglobin, and more specifically, hemoglobin A0 (HbA0), hemoglobin A1c (HbA1c), hemoglobin A2 (HbA2), hemoglobin S (HbS, sickle cell hemoglobin), hemoglobin F (HbF, fetal hemoglobin), hemoglobin M (HbM), hemoglobin C (HbC), methemoglobin, carbamylated hemoglobin, and acetylated hemoglobin. HbA1c has the following types: stable HbA1c and unstable HbA1c. Specific examples of substances in living body and substances in blood include bilirubin, hormones and metabolic substances. Examples of hormones include a thyroid stimulation hormone, an adrenocorticotrophic hormone, chorionic gonadotropin, insulin, glucagon, an adrenomedullary hormone, epinephrine, norepinephrine, androgen, estrogen, progesterone, aldosterone, and cortisol.

In this specification, the term "sample" refers to a sample prepared from a sample raw material. Examples of the sample raw material include a biological sample, preferably a biological sample containing the above-mentioned analyte, and more preferably a sample containing hemoglobin. Examples of biological samples include blood, products derived from blood and containing a red blood cell component, saliva and cerebrospinal fluid. Examples of blood include blood collected from a living body, preferably animal blood, more preferably mammal blood, and still more preferably human blood. Examples of products derived from blood and containing a red blood cell component include those separated or prepared from blood and containing a red blood cell component, such as a blood cell fraction from which plasma is removed, a blood cell condensate, freeze-dried blood or blood cell, a hemolyzed sample prepared by hemolyzing whole blood, centrifuged blood, spontaneously-sedimented blood, and washed blood cell.

In a sample analysis by electrophoresis, a calibration material may be used for improving the accuracy and reproducibility of the analysis. Further, a control material may also be used for controlling or maintaining the accuracy and reproducibility of the analysis. Therefore, the "sample" or the "sample raw material" in this specification may include a calibration material and a control material. In this specification, examples of the "calibration material" include a reference material used for calibrating an apparatus, and examples of the "control material" include a sample used for controlling or maintaining the accuracy and/or reproducibility of an analysis such as control serum, polled serum and a standard solution.

### [Sample Analysis Method]

Viewed from one aspect, the sample analysis method of the present invention relates to a method for analyzing a sample by electrophoresis using an electrophoresis apparatus comprising a channel and a sample reservoir formed in the channel. The method includes: adding the sample to the sample reservoir of the electrophoresis apparatus where the channel contains an electrophoresis running buffer; and performing electrophoresis by applying a voltage to both ends of the channel. The concentration of at least one of a) and b) is set to be approximately the same between the sample and the electrophoresis running buffer; where a) and b) are defined as follows:
a) an ion that moves in the same direction as an analyte in the sample by the electrophoresis and has a smaller degree of mobility than the analyte, and
b) an ion that moves in the opposite direction to the analyte.

It can be said that the sample analysis method of the present invention also is a method in which electrophoresis is performed while sampling continuously. Therefore, viewed from another aspect, the sample analysis method of the present invention relates to a method for analyzing a sample by electrophoresis while sampling continuously. The method includes setting the concentration of at least one of a) and b) to be approximately the same between the sample and the electrophoresis running buffer where a) and b) are defined as follows:
a) an ion that moves in the same direction as an analyte in the sample by the electrophoresis and has a smaller degree of mobility than the analyte, and
b) an ion that moves in the opposite direction to the analyte.

In the sample analysis method of the present invention, the concentrations of a) and b) are preferably set to be approximately the same between the sample and the electrophoresis running buffer because the separation capability can be further improved. Examples of the way to set the concentration of at least one of a) and b) to be approximately the same between the sample and the electrophoresis running buffer include: preparing a sample by diluting (mixing) a sample raw material with a sample preparation solution containing the same or similar ion component to that of an electrophoresis running buffer such that the concentration of the ion component in the sample becomes approximately the same as that in the electrophoresis running buffer; and preparing an electrophoresis running buffer and a sample individually such that the concentration of the ion component becomes approximately the same between the electrophoresis running buffer and the sample. In addition, examples of the way include: preparing a sample preparation solution (sample diluent solution) that makes the concentration of at least one of a) and b) approximately the same between an electrophoresis running buffer and a diluted sample; preparing an additive having the same composition (proportion of components) of at least one of the ions of a) and b) as an electrophoresis running buffer and having a higher concentration of at least one of a) and b) than the electrophoresis running buffer; and adding the prepared additive to a sample raw material or a diluted sample to set the concentration of at least one of a) and b) to be approximately the same between the electrophoresis running buffer and the sample. In this specification, the "sample preparation solution (sample diluent solution)" refers to a material that is mixed with a sample raw material in preparing a sample, and examples of which include a diluent solution for diluting a sample raw material.

For this reason, the sample analysis method of the present invention may further include a step of preparing a sample. The step of preparing a sample preferably includes diluting a sample raw material with a sample preparation solution having the same or similar ion component to that of an electrophoresis running buffer such that the concentration of the ion component in the sample becomes approximately the same as that in the electrophoresis running buffer. Further, the step may include preparing the above-described sample preparation solution (sample diluent solution) and preparing the above-described additive. The concentration of the ion component in the sample preparation solution used for the dilution is preferably higher than that in the electrophoresis running buffer in view of diluting the sample raw material. The sample analysis method of the present invention may further include a step of preparing an electrophoresis running buffer. Also, the sample analysis method of the present invention may further include a step of filling the channel with the prepared electrophoresis running buffer.

The sample analysis method of the present invention preferably includes allowing, when the concentration of at least one of a) and b) is set to be approximately the same between the sample and the electrophoresis running buffer during the electrophoresis, ions sufficiently close to the sample in the channel to be in approximately the same state as the sample added to the sample reservoir. In this specification, "the vicinity of the sample" includes a range from which the charge of the sample can be affected and changed, and preferably includes a range from which the charge of the analyte in the sample can be affected.

In the sample analysis method of the present invention, the channel preferably includes an ionic pseudostationary phase in terms of further improving the separation capability In this specification, the term "ionic pseudostationary phase" refers to a material that may be bonded to and form a complex with an analyte in a sample. The ionic pseudostationary phase may be introduced into the channel by incorporating the ionic pseudostationary phase in the electrophoresis running buffer or in the sample. Although the ionic pseudostationary phase may be introduced into the channel independently from the electrophoresis running buffer and the sample, it is preferably added to both the electrophoresis running buffer and the sample in terms of improving the separation capability

When analyzing an analyte having a positive charge like hemoglobin, polysaccharides having a cathodic group, such as sulfated polysaccharides, carboxylated polysaccharides, sulfonated polysaccharides, and phosphorylated polysaccharides can be used as the ionic pseudostationary phase. In particular, it is preferable to use sulfated polysaccharides and carboxylated polysaccharides, and more preferably sulfated polysaccharides. Examples of sulfated polysaccharides include chondroitin sulfate, heparin, heparan, fucoidan or salts thereof, and particularly chondroitin sulfate or a salt thereof is preferable. Examples of chondroitin sulfate include chondroitin sulfate A, chondroitin sulfate C, chondroitin sulfate D and chondroitin sulfate E. Examples of carboxylated polysaccharides include alginic acid, hyaluronic acid or salts thereof. When the ionic pseudostationary phase is a salt, examples of the counter ion include ions of alkali metal, alkali earth metal, an amine compound and organic base. Examples of salts of carboxylated polysaccharides include sodium salt, potassium salt, lithium salt, calcium salt, ammonium salt, tris salt, arginine salt, lysine salt, and histidine salt.

The sample analysis method of the present invention may include a step of detecting separation by electrophoresis by optical means. Examples of detection by optical means include absorbance measurement. The wavelength of the absorbance can be determined appropriately in accordance with the types of the sample and the analyte.

The sample analysis method of the present invention may include a step of analyzing an electropherogram obtained by optical means. When separating sample components (performing electrophoresis) while sampling continuously, it is difficult to individually analyze each analyte in the sample based on the obtained electropherogram. However, by analyzing the electropherogram, each analyte in the sample can be separated and analyzed individually This analyzing step may include performing an operation on the electropherogram to obtain electropherograms separated based on the mobility (separation time) and determining the proportion of components of the analyte in the sample on the basis of the height and/or area of each peak of the electropherogram after the operation. Examples of the operation include differentiation and calculus of finite differences.

In the sample analysis method of the present invention, the channel is preferably a capillary. Consequently, capillary electrophoresis can be performed. In this specification, the term "capillary" refers to a tube having an inner diameter of about 100 µm or less. The tube may have a circular or rectangular cross-section. The length of the capillary is not particularly limited. An adequate separation capability can be achieved by the sample analysis method of the present invention even when the separation length is small. Thus, the length of the capillary is about 10 to about 150 mm, and preferably about 20 to about 60 mm.

Since an adequate separation capability can be achieved by the sample analysis method of the present invention even when the separation length is small, the electrophoresis apparatus is preferably an electrophoresis microchip. For example, the electrophoresis chip has a length of about 10 to about 200 mm, a width of about 10 to about 60 mm, and a thickness of about 0.3 to about 5 mm, and preferably has a length of about 30 to about 70 mm, a width of about 10 to about 60 mm, and a thickness of about 0.3 to about 5 mm. As the electrophoresis chip, one that is to be discussed later can be used.

In the sample analysis method of the present invention, after supplying to the channel an adequate amount of the sample for a frontal analysis, an electrophoresis running buffer and/or a washing may be introduced into the channel in place of the sample. In this case, the electrophoresis running buffer is preferably the same electrophoresis running buffer that has been filled in the channel.

In the sample analysis method of the present invention, a calibration material or a control material may be used as a sample or sample raw material. In relation to this aspect, the sample analysis method of the present invention preferably includes a step of preparing a sample from a calibration material and/or a control material as a sample raw material. This sample preparation step may include, for example: checking an ion contained in the calibration material and/or the control material; comparing the ion contained in the calibration material and/or the control material with an ion contained in a biological sample to be analyzed (hereinafter referred to as a "sample to be analyzed"): and adjusting, in accordance with the "ion that moves in the same direction as an analyte by electrophoresis and has a smaller degree of mobility than the analyte (the ion of a))" and/or the "ion that moves in the opposite direction to the analyte (the ion of b))" or the presence or absence of other ions in the calibration material and/or the control material and/or concentrations thereof, the ion concentration in the calibration material and/or the control material or the prepared sample to be approximately the same as the ion concentration in the sample to be analyzed or the sample raw material. Consequently, the calibration material and the control material can be electrophoretically analyzed under approximately the same conditions as the sample to be analyzed, so that the accuracy of calibration of the apparatus can be improved and adequate control can be performed. Examples of other ions include an ion that moves in the same direction as the analyte by electrophoresis and has a larger degree of mobility than the analyte.

The sample analysis method of the present invention according to this aspect is based upon the following findings. An ion concentration in a typical calibration material and/or control material may differ from that in a biological sample, and calibration and control using such materials do not result in adequate accuracy. By setting the state of the ion in the calibration material or control material to be approximately the same as that in the biological sample, the accuracy of calibration of the apparatus can be improved and/or adequate control can be performed.

Generally, biological samples such as serum and plasma as described above contain various ions. The ions may include, for example, the "ion that moves in the same direction as an analyte by electrophoresis and has a smaller degree of mobility than the analyte (the ion of a))" and the "ion that moves in the opposite direction to the analyte (the ion of b))." For example, serum and plasma contain about 140 mmol/L of sodium ion, about 4 mmol/L of potassium ion and about 100 mmol/L of chlorine ion, and red blood cells contain about 100 mmol/L of sodium ion, about 50 mmol/L of potassium ion, and about 100 mmol/L of chlorine ion.

Tb supply a calibration material and a control material under the condition where the analyte can be preserved stably, an additive for stabilizing the analyte is generally added to the calibration material and the control material. When the analyte is hemoglobin or albumin, for example, additives such as a buffer solution, salts and sucrose are added to stabilize the analyte (hemoglobin: JP H6-308120, Japanese Patent Nos. 3686482 and 4061365, JP 2004-125560; albumin: Japanese Patent No. 4183116, WO 2001-094618). Because these additives are added for the purpose of stabilizing the analyte, ions originating from the additives and the effects of these ions on electrophoresis are hardly taken into consideration. For this reason, when the calibration material and the control material are compared with the sample to be analyzed, the concentration of the ion of a) and/or the ion of b) in the calibration material or the control material may be lower/higher than that in the sample to be analyzed in some instances. Further, ion components that are generally contained in a biological sample are removed during the production by dialysis or the like in some instances and the above-mentioned ions are hardly contained in the calibration material and the control material.

The inventors have found that when such calibration material and control material are used in an analysis by electrophoresis, the obtained results differ from analysis results on the sample to be actually analyzed (e.g., a sample originating from a biological sample), the calibration material and the control material not adequately fulfilling their purposes.

Moreover, as described above, the concentrations of ions such as the ion of a), the ion of b) and other ions in the calibration material and the control material differ from those in the sample to be analyzed in many instances. It has been found that the difference in concentration causes variations in the accuracy of analysis such as the accuracy of separation and variations in measurement time. For example, when an ion concentration in the calibration material and the control material is lower than that in the sample to be analyzed or the calibration material and the control material hardly contain an ion, the concentration of an ion originating from the sample becomes smaller as compared with a biological sample, making a current difficult to flow. As a result, the speed of electrophoresis becomes small, requiring enormous amounts of measurement time. On the other hand, when an ion concentration in the calibration material and the control material is higher than that in the sample to be analyzed, a flow of current is further facilitated as compared with a biological sample. Consequently, the speed of electrophoresis becomes high, resulting in inadequate accuracy of separation.

Because the method according to this aspect of the invention includes the sample preparation step as described above, the accuracy of separation can be improved even when measuring a calibration material or control material. Thus, the accuracy of calibration of the apparatus can be improved and adequate control can be performed.

In the sample preparation step, allowing ions to be in approximately the same state includes the following. When the sample to be analyzed contains the ion of a) and/or the ion of b), a sample is prepared from a calibration material or control material as a sample raw material such that the ion concentration in the prepared sample becomes approximately the same as that in the sample to be analyzed. When the sample to be analyzed contains the ion of a), the ion of b) and other ions, a sample is prepared from a calibration material or control material as a sample raw material such that the concentrations of the ion of a), the ion of b) and other ions in the preparing sample become approximately the same as those in the sample to be analyzed. Examples of the way to make the concentrations approximately the same include, when an ion for preventing deterioration of stability is to be added to the calibration material and/or the control material at the time of production, adding the ion so that its concentration becomes approximately the same as that in a biological sample, or when the calibration material and/or the control material is used in the dissolved form, using a solution thereof to set the concentration to be approximately the same as that in a biological sample, and dissolving the calibration material and/or the control material using an electrophoresis running buffer having approximately the same ion concentration as the biological sample.

As a result of the sample preparation step in which the calibration material and/or the control material is used as a sample raw material, the accuracy of separation can be improved even when measuring a calibration material or control material. Thus, the accuracy of calibration of the apparatus can be improved and adequate control can be performed. Therefore, viewed from still another aspect, the present invention relates to a calibration method using the calibration material and a control method using the control material both of which include the sample preparation step.

### [Method for Measuring Analyte]

Viewed from still another aspect, the present invention relates to a method for measuring an analyte in a sample by the sample analysis method of the present invention. The sample and the analyte are as described above. The analyte is preferably hemoglobin, more preferably HbA1c and still more preferably stable HbA1c as an indicator in the diagnosis of diabetes. Further, by the measurement method of the present invention, stable HbA1c as an indicator in the diagnosis of diabetes and other hemoglobin components are preferably measured. Therefore, when viewed from still another aspect, the present invention relates to a method for measuring HbA1c including measuring HbA1c by the sample analysis method of the present invention. In terms of diagnosing diabetes, stable HbA1c is separated from other hemoglobin components and measured by the sample analysis method of the present invention.

### (Measurement Kit]

Viewed from still another aspect, the present invention relates to a measurement kit including an electrophoresis running buffer, a sample preparation solution for preparing a sample, and an instruction manual describing preparing the sample using the sample preparation solution such that the concentration of at least one of a) and b) becomes approximately the same between the electrophoresis running buffer and the prepared sample; where a) and b) are defined as follows:
a) an ion that moves in the same direction as an analyte in the sample by the electrophoresis and has a smaller degree of mobility than the analyte, and
b) an ion that moves in the opposite direction to the analyte.
The instruction manual may not be packed with the measurement kit of the present invention and it may be provided on the web.

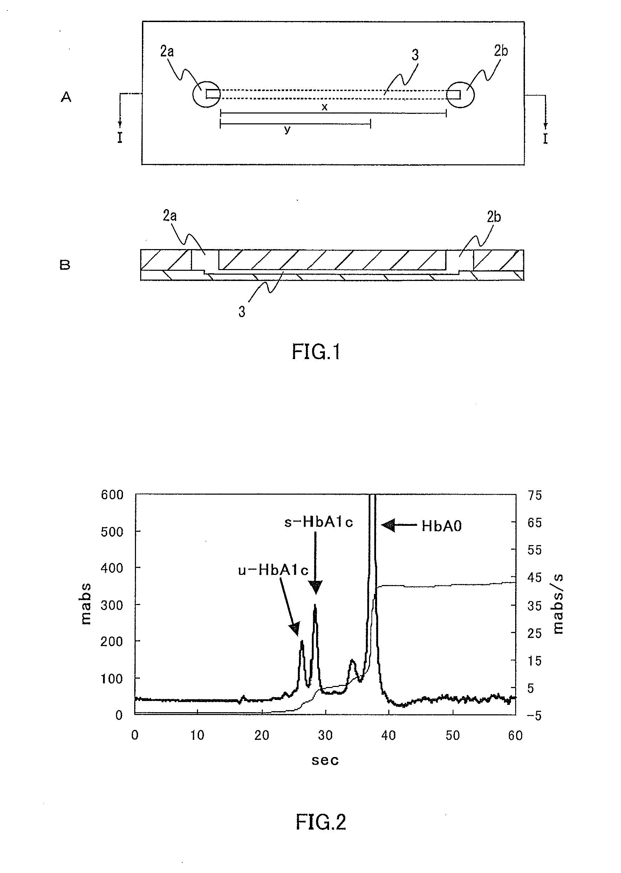

In the measurement kit of the present invention, the electrophoresis running buffer and the sample preparation solution are as described above. Preferably, the measurement kit further includes an electrophoresis chip. The electrophoresis chip preferably includes a sample reservoir, an electrophoresis running buffer reservoir and a channel, and the sample reservoir and the electrophoresis running buffer reservoir are in communication with each other via the channel. Further, the channel of the electrophoresis chip may be filled with the above-described electrophoresis running buffer. As the electrophoresis chip, for example, the electrophoresis chip described in WO 2008/136465 and the electrophoresis chip (described herein) shown in FIG. 1 can be used.

In place of or in addition to the sample preparation solution, the measurement kit of the present invention may include an additive having the same composition (proportion of components) of at least one of the ions of a) and b) as the electrophoresis running buffer and having a higher concentration of at least one of a) and b) than the electrophoresis running buffer.

The measurement kit of the present invention may include, for example, a calibration material and a control material. The measurement kit according to this aspect of the invention preferably includes an instruction manual describing a way to prepare a sample using the calibration material and/or the control material included in the kit as a sample raw material, and more preferably an instruction manual describing preparing a sample such that the concentrations of the "ion that moves in the same direction as an analyte by electrophoresis and has a smaller degree of mobility than the analyte (the ion of a))" and the "ion that moves in the opposite direction to the analyte (the ion of b))" or other ions become approximately the same between the calibration material and/or the control material and the sample to be analyzed. Further, as discussed herein, the calibration material and the control material may be a calibration material and/or a control material.

The measurement kit of the present invention may include an instruction manual describing a way to prepare a sample from a commercially available calibration material and/or control material as a sample raw material. Consequently, even when the kit does not include a calibration material and/or control material or when using a calibration material and/or control material other than the calibration material and/or control material included in the kit, it is possible to set the ion concentration to be approximately the same between a sample originating from the calibration material and the control material and a biological sample, so that the accuracy of calibration of the apparatus can be improved and adequate control can be performed. The instruction manual preferably describes a method for preparing a variety of the calibration material and/or control material products. For example, the instruction manual may describe, as to one product, dissolving the product in purified water, as to another product, dissolving the product in a physiological salt solution (0.9% of salt solution), and, as to still another product, dissolving the product in an electrophoresis running buffer. Further, when the calibration material and the control material are of a liquid type, the instruction manual may describe that a sample is prepared by diluting them with a solution, such as purified water, a physiological salt solution or an electrophoresis running buffer. Further when the calibration material and the control material are of a dry type such as freeze-dried products, the instruction manual may describe that a sample is prepared by dissolving them in any of the above-described solutions. Furthermore, descriptions of the dilution factor, solution amount, etc., in the instruction manual allow more appropriate sample preparation, so that the accuracy of calibration and/or control can be improved.

### [Method for Preparing Sample]

Viewed from still another aspect, the present invention relates to a method for preparing a sample to be analyzed by electrophoresis. The method includes preparing the sample such that the concentration of at least one of a) and b) becomes approximately the same between an electrophoresis running buffer used for electrophoresis and the preparing sample; where a) and b) are defined as follows:
a) an ion that moves in the same direction as an analyte in the sample by the electrophoresis and has a smaller degree of mobility than the analyte, and
b) an ion that moves in the opposite direction to the analyte.
With the sample preparation method of the present invention, the sample analysis method of the present invention can be carried out more easily.

Examples of the sample preparation include: preparing a sample by diluting a sample raw material with a sample preparation solution containing the same or similar ion component to that of an electrophoresis running buffer such that the concentration of the ion component becomes approximately the same between the sample and the electrophoresis running buffer and individually preparing an electrophoresis running buffer and a sample such that the concentration of an ion component becomes approximately the same between the electrophoresis running buffer and the sample. In addition, examples of the sample preparation include: preparing a sample preparation solution (sample diluent solution) that makes the concentration of at least one of a) and b) approximately the same between an electrophoresis running buffer and a diluted sample; preparing an additive having the same composition (proportion of components) of at least one of the ions of a) and b) as an electrophoresis running buffer and having a higher concentration of at least one of a) and b) than the electrophoresis running buffer and adding the prepared additive to a sample raw material or a diluted sample to set the concentration of at least one of a) and b) to be approximately the same between the electrophoresis running buffer and the sample.

The sample analysis method, the analyte measurement method, the measurement kit and the sample preparation method of the present invention can be used for, but are not limited to, the diagnosis, treatment and observation of progression of diabetes, etc. For example, they can also be used for non-diagnostic purposes such as simple chemical analysis, detection of gene polymorphism such as variant hemoglobin, checking of the proportion of isozyme as an enzyme, analysis of food, beverage, flavoring, detergent, cosmetic and pharmaceutical components, and analysis of extracts or solutes such as adhesives (e.g., adhesive tape), coatings and ink.

### [Calibration Material/Control Material]

Viewed from still another aspect, the present invention relates to a calibration material and to a kit including the calibration material. The calibration material of the present invention contains an analyte. The calibration material of the present invention further contains an ion component, which may be contained in a biological sample containing an analyte, in approximately the same concentration as in the biological sample. With the calibration material of the present invention, the accuracy of calibration of the apparatus can be improved. Further, the kit according to this aspect includes the calibration material and an instruction manual describing a way to prepare a sample from the calibration material included in the kit as a sample raw material. The calibration material may be the calibration material of the present invention or may be a commercially available calibration material. When the kit includes a commercially available calibration material, the kit according to this aspect of the invention preferably includes an instruction manual describing preparing a sample such that the concentrations of the "ion that moves in the same direction as the analyte by electrophoresis and has a smaller degree of mobility than the analyte (the ion of a))"and the "ion that moves in the opposite direction to the analyte (the ion of b))" or the concentrations of other ions become approximately the same between the calibration material and the sample to be analyzed.

Viewed from still another aspect, the present invention relates to a control material and to a kit including the control material. The control material contains an analyte, and an ion component, which may be contained in a biological sample containing an analyte, in approximately the same concentration as in the biological sample. With the control material of the present invention, the accuracy of calibration of the apparatus can be improved. Further, the kit according to this aspect of the invention includes the control material and an instruction manual describing a way to prepare a sample from the control material included in the kit as a sample raw material. The control material may be the control material of the present invention or it may be a commercially available control material. When the kit includes a commercially available control material, the kit preferably includes an instruction manual describing preparing a sample such that the concentrations of the "ion that moves in the same direction as the analyte by electrophoresis and has a smaller degree of mobility than the analyte (the ion of a))"and the "ion that moves in the opposite direction to the analyte (the ion of b))" or the concentrations of other ions become approximately the same between the control material and the sample to be analyzed.

The calibration material and the control material of the present invention can be produced by a general method for producing a calibration material or control material except for requiring a step of adding an ion component or preparing a calibration material or control material such that an ion component, which may be contained in a biological sample containing an analyte, becomes approximately the same between the calibration material or control material and the biological sample.

The calibration material, the control material, and the kit including these materials of the present invention are not only used in the sample analysis method and the analyte measurement method of the present invention, but may be used in other measurements by electrophoresis and measurements using measurement principles other than electrophoresis as a calibration material and a control material. Even when they are used in other measurements by electrophoresis and measurements using principles other than electrophoresis, the above-described sample preparation method is similarly carried out. The calibration material and the control material of the present invention do not include one produced by freeze-drying or diluting the biological sample such as an untreated hemolyzed sample.

Hereinafter, the sample analysis method of the present invention will be described by way of examples. It should be noted that the present invention is not limited to the following description because the following are merely examples.

### Embodiment 1

In an exemplary embodiment, a capillary electrophoresis microchip shown in FIG. 1 is used. As an example, the sample raw material is whole blood and the analyte is hemoglobin.

FIG. 1 is a conceptual diagram showing an exemplary configuration of an electrophoresis chip used in the sample analysis method of the present invention. The electrophoresis chip shown in FIG. 1 includes a channel 3, a sample reservoir 2a and an electrophoresis running buffer reservoir 2b. The sample reservoir 2a and the electrophoresis running buffer reservoir 2b are formed at ends of the channel 3, respectively.

For example, the electrophoresis chip as a whole has a length of about 10 to about 200 mm, a width of about 10 to about 60 mm, and a thickness of about 0.3 to about 5 mm. The electrophoresis chip preferably has a length of about 30 to about 70 mm, a width of about 10 to about 60 mm, and a thickness of about 0.3 to about 5 mm.

Although the length of the channel 3 is determined appropriately in accordance with the length of the electrophoresis chip, the channel 3 has a length of about 50 to about 150 mm, preferably about 50 to about 60 mm. Further, the inner diameter of the channel 3 is about 200 µm or less, preferably about 10 to about 200 µm, and more preferably about 25 to about 100 µm. The shape of the channel 3 is not particularly limited and may be, for example, circular or rectangular.

Examples of the material of the channel 3 include, but are not limited to, glass, fused silica and plastic. Examples of the plastic include, but are not limited to, polymethyl methacrylate (PMMA), polycarbonate, polystyrene, polytetrafluoroethylene (PTFE), and polyetheretherketone (PEEK). The inner wall of the channel 3 may be coated with a silylation agent or the like. The coating of the inner wall of the channel 3 with a silylation agent or the like can be carried out in the same manner as any of the methods described in WO 2008/029685, WO 2008/136465 and JP 2009-186445 A. Further, the channel 3 may be a commercially available capillary.

Although the capacities of the sample reservoir 2a and the electrophoresis running buffer reservoir 2b are determined appropriately in accordance with the inner diameter, the length, etc. of the channel, each capacity is in a range of, for example, about 1 to about 1000 mm³, preferably about 50 to about 100 mm³. Each of the sample reservoir 2a and the electrophoresis running buffer reservoir 2b may be provided with an electrode for applying a voltage to the both ends of the channel 3.

In terms of preventing evaporation of a sample and an electrophoresis running buffer and reducing variations in their concentration, the top faces of the channel 3, the sample reservoir 2a and the electrophoresis running buffer reservoir 2b are preferably covered with a sealing material or the like.

Next, an exemplary sample analysis method using the electrophoresis chip shown in FIG. 1 will be described.

First, an electrophoresis running buffer is filled in the channel 3 of the electrophoresis chip.

The electrophoresis running buffer can be filled in the channel 3 by, for example, pressure or capillary action. Also, an electrophoresis chip with the channel 3 being pre-filled with an electrophoresis running buffer may be used.

For example, organic acid, a buffer solution, amino acids, etc., can be used as the electrophoresis running buffer, among which organic acids are preferable. Examples of the organic acid include, but are not limited to, maleic acid, tartaric acid, succinic acid, fumaric acid, phthalic acid, malonic acid and malic acid. Examples of the buffer solution include, but are not limited to, MES, ADA, ACES, BES, MOPS, TES, HEPES, and TRICINE. Examples of the amino acids include, but are not limited to, glycine, alanine and leucine. The electrophoresis running buffer may also contain a weak base and 1,4-diaminobutane in addition to the organic acid and/or buffer solution. Examples of the weak base include, but are not limited to, arginine, lysine, histidine, and tris. The pH of the electrophoresis running buffer is, for example, 4.5 to 6. When the analyte is hemoglobin as in the present embodiment, the electrophoresis running buffer preferably includes an ionic pseudostationary phase of sulfonated polysaccharide such as chondroitin sulfate or a salt thereof. As a result, the sulfonated polysaccharide is bonded to and forms a complex with an amino group at the B-chain N-terminus of hemoglobin, allowing a further improvement of the accuracy of separation.

Next, a sample is placed in the sample reservoir 2a of the electrophoresis chip where the channel 3 is filled with the electrophoresis running buffer.

The sample placed in the sample reservoir 2a can be prepared by diluting whole blood as the sample raw material with the above-described sample preparation solution or the like. When preparing the sample, the concentration of at least one of the "ion that moves in the same direction as hemoglobin as the analyte by electrophoresis and has a smaller degree of mobility than hemoglobin as the analyte" and the "ion that moves in the opposite direction to hemoglobin as the analyte" is preferably set to be approximately the same between the electrophoresis running buffer and the sample. For example, when the electrophoresis running buffer contains chondroitin sulfate, sodium, tartaric acid and arginine as ion components, hemoglobin as the analyte forms a complex with the chondroitin sulfate and becomes negative. Therefore, it is preferable that the ion concentrations of chondroitin sulfate and tartaric acid having a negative charge (i.e., ions that move in the opposite direction to the analyte) are adjusted to be approximately the same between the sample and the electrophoresis running buffer.

As described above, setting the ion concentrations to be approximately the same can be achieved as follows. When the separation length (the distance between the end of the sample reservoir on the channel side and the analyzing portion) is about 10 to about 30 mm and the difference in concentration between an ion contained in the electrophoresis running buffer and the corresponding ion in the sample is more than about -10 mmol/L and less than about +10 mmol/L, preferably in a range of about -5 mmol/L to about +5 mmol/L, it can be considered that the concentrations are approximately the same. In these embodiments, Na, K and Cl are present in serum, plasma and red blood cells. When any one of these is used as a sample raw material and hemoglobin is set as an analyte, Cl corresponds to the "ion that moves in the opposite direction to the analyte (the ion of b))." The concentration of Cl (molecular weight: 35.5) in serum, plasma and red blood cells is generally about 100 mmol/L = 3.55 g/L. When a sample is prepared by diluting any one of these sample raw materials by approximately 10 times, the sample is to contain about 0.355 g/L of Cl. Hence, the concentrations of the ions of b) other than Cl in the electrophoresis running buffer and those in the sample may be set so that the difference in concentration between Cl in the electrophoresis running buffer and that in the sample falls within the range described above. When the electrophoresis running buffer and the sample both contain tartaric acid (molecular weight: 150), the tartaric acid corresponds to the ion of b). Therefore, by setting the concentration of tartaric acid to be, for example, 3.55 g/L = 24 mmol/L or more, preferably 7.1 g/L = 48 mmol/L or more between the electrophoresis running buffer and the sample, the difference in concentration between the ion contained in the electrophoresis running buffer and the corresponding ion in the sample can be brought within the range described above. Although the sample may contain ions such as phosphate anion and sulfate ion, the concentration of each ion is about 1 mmol/L. Thus, these ions may fall within the above-described preferred range (-5 mmol/L to +5 mmol/L).

For example, the sample raw material is diluted by about 1.2 to about 100 times, preferably about 2 to about 30 times, and more preferably about 3 to about 15 times. When the sample raw material contains an ion component in such a concentration that the ion component may affect the separation capability, the sample raw material is diluted by about 2 to about 1000 times, preferably about 5 to about 300 times, and more preferably about 10 to about 200 times.

It is preferable that the sample and the electrophoresis running buffer have approximately the same pH. For this reason, a pH buffer substance may be added to the sample and/or the electrophoresis running buffer to adjust their pH. The pH buffer substance is not particularly limited and any ion can be used. In particular, ions whose pKa falls within preferably ± 1.0, more preferably ± 0.7 of the pH of the sample and the electrophoresis running buffer after the pH adjustment are preferred. When the pH buffer substance is entirely ionized, its concentration is in a range of, for example, about 10 to about 3000 mmol/L, preferably about 50 to about 1500 mmol/L, and more preferably about 100 to about 800 mmol/L. Further, when the pH buffer substance is an ion whose pKa falls within the pH of the sample and that of the electrophoresis running buffer after the adjustment, its concentration is in a range of, for example, about 5 to about 2000 mmol/L, preferably about 20 to about 1000 mmol/L, more preferably about 50 to about 600 mmol/L, and still more preferably about 100 to about 400 mmol/L.

Next, a voltage is applied to the both ends of the channel 3, in other words, between the sample reservoir 2a and the electrophoresis running buffer reservoir 2b. As a result, the sample is introduced into the channel 3 from the sample reservoir 2a and is separated in the channel 3, whereby the sample containing hemoglobin moves towards the electrophoresis running buffer reservoir 2b from the sample reservoir 2a.

The voltage applied to the both ends of the channel 3 is, for example, about 0.5 to about 10 kV, and preferably about 0.5 to about 5 kV

Subsequently, a measurement is performed at a given position. A measurement can be performed by optical means, for example, by absorbance measurement. When the analyte is hemoglobin, the absorbance at a wavelength of 415 nm is preferably measured.

The position at which the measurement is performed, in other words, the length required for the separation (y in FIG. 1) is determined appropriately according to, for example, the length of the channel 3. For example, when the length of the channel 3 is about 50 to about 150 mm, a measurement is preferably performed at a position preferably about 5 to about 140 mm, more preferably about 10 to about 100 mm, and more preferably about 15 to about 50 mm apart from the end of the channel 3 on the sample reservoir 2a side.

As a result of conducting the analysis in the above-described manner, hemoglobin can be measured. Preferably HbA1c, more preferably stable HbA1c as an indicator in the diagnosis of diabetes is separated from other hemoglobin components and is measured. Examples of other hemoglobin components include unstable HbA1c, HbS, HbF, HbA2 and HbC. Furthermore, by analyzing the obtained electropherogram, the proportion of HbA1c (%HbA1c) and the amount of HbA1c can be measured. For this reason, the analysis method of the present invention can be used for the prevention, diagnosis and treatment of diabetes.

In this embodiment, a hemolyzed sample obtained by hemolyzing whole blood has been used as the sample raw material and the sample obtained by diluting the sample raw material with the sample preparation has been used. However, the present invention is not limited to this example. The sample may be, for example, a sample raw material itself that is collected from a living body and untreated (e.g., hemolyzed blood) or may be a sample obtained by diluting a sample raw material with a solvent (sample preparation solution). The sample raw material may be, for example, a blood sample such as blood or a sample containing a commercially available product containing hemoglobin. The blood sample is not particularly limited, and examples of which include a hemolyzed sample obtained by hemolyzing a blood cell containing material, such as whole blood. The hemolyzation method is not particularly limited, and examples of which may include ultrasonic treatment, freezing and thawing treatment, pressure treatment, osmotic pressure treatment, and surfactant treatment. Although the osmotic pressure treatment is not particularly limited, a blood cell containing material, such as whole blood, may be treated with a hypotonic solution. The hypotonic solution is not particularly limited, and examples of which include water and a buffer solution. The buffer solution is not particularly limited, and examples of which may include the above-described buffer agent and additive. The surfactant used in the surfactant treatment is not particularly limited, and a non-ionic surfactant may be used. The non-ionic surfactant is not particularly limited, and polyoxyethylene isooctylphenylether (trade name "Triton™ X-100") may be used.

Hereinafter, the present invention will be described in more detail by means of Examples and Comparative Examples. It is to be noted that the present invention is not limited to the following Examples.

### Examples

### [Microchip]

An electrophoresis chip (made of polymethacrylate, length: 70 mm, width: 30 mm) having the structure shown in FIG. 1 was used. The electrophoresis chip had a rectangular channel 3. A sample reservoir 2a (capacity: 0.05 mL) and an electrophoresis running buffer reservoir 2b (capacity: 0.05 mL) were formed at ends of the channel 3, respectively. The length (x in FIG. 1) of the channel 3 was 40 mm and the width and depth of the channel 3 were 40 µm each (internal diameter of the channel: 40 µm). Further, the distance between the center of the sample reservoir 2a and the center of the electrophoresis running buffer reservoir 2b was 46 mm.

### (Example 1)

In Example 1, the analyte was unstable HbA1c.

### [Electrophoresis Running Buffer]

100 mmol/L of a L-tartaric acid solution containing 1.0 wt% of sodium chondroitin sulfate C (manufactured by Seikagaku corporation), 1 mM of NaN₃ and 0.01% of Triton™ X-100 and adjusted with L-argine to have a pH of 4.8 was used as the electrophoresis running buffer.

### [Sample]

111 mmol/L of a L-tartaric acid solution containing 1.11 wt% of sodium chondroitin sulfate C (manufactured by Seikagaku corporation), 1.1 mM of NaN₃ and 0.011% of Triton™ X-100 and adjusted with L-argine to have a pH of 4.8 was prepared as a sample preparation solution. A hemoglobin solution having a hemoglobin concentration of 140 g/L was prepared as a sample raw materials. Although the hemoglobin solution contained sucrose as an additive, it did not contain the ion of a), the ion of b) or other ions described above. A sample was prepared by diluting 0.01 ml of the sample raw material with 0.09 ml of the sample preparation solution (diluted by 10 times). In other words, the sample was prepared such that the concentration of sodium chondroitin sulfate C became 1.0 wt% and the concentration of L-tartaric acid became 100 mmol/L. Table 1 provides the ion concentrations of chondroitin sulfate, tartaric acid and arginine in the electrophoresis running buffer and those in the sample. Note that chondroitin sulfate and tartaric acid correspond to the "ion that moves in the opposite direction to the analyte (the ion of b))." Further, the hemoglobin solution containing unstable HbA1c, stable HbA1c and HbA0 (hemoglobin solution not containing HbS and HbF) was used as the sample raw material.

### [Electrophoresis]

The electrophoresis running buffer was introduced into the electrophoresis running buffer reservoir 2b of the electrophoresis chip and it was filled in the channel 3 by capillary action. Subsequently, the sample was introduced into the sample reservoir 2a. An electrode was inserted into each of the sample reservoir 2a and the electrophoresis running buffer reservoir 2b. A voltage of 1400V was applied to the inserted electrodes to perform electrophoresis. The absorbance at 415 nm was measured at the position located 20 mm apart from the end of the channel 3 on the sample reservoir 2a side (y in FIG. 1). FIG. 2 shows an example of the obtained electropherogram.

### (Comparative Example 1)

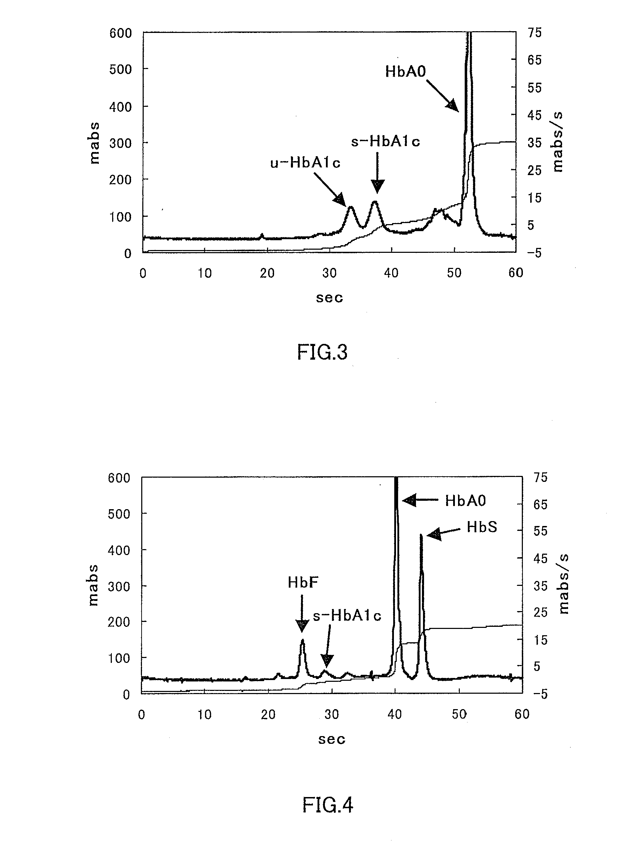

In Comparative Example 1, a measurement was performed in the same manner as Example 1 except that the electrophoresis running buffer (100 mmol/L of a L-tartaric acid solution containing 1.0 wt% of sodium chondroitin sulfate C (manufactured by Seikagaku corporation), 1 mM of NaN₃ and 0.01% of Triton™ X-100 and adjusted with L-argine to have a p.H of 4.8) was used as a sample preparation solution. Table 1 provides the concentrations of chondroitin sulfate, tartaric acid and arginine in the electrophoresis running buffer and those in the sample. FIG. 3 shows an example of the obtained electropherogram.

| (Table1) | Example 1 | | Comparative Example 1 | |
|---|---|---|---|---|
| | Electrophoresis running buffer | Sample | Electrophoresis running buffer | Sample |
| chondroitin sulfate | 1.0 Wt% | 1.0 wt% | 1.0 wt% | 0.9 wt% |
| tartaric acid | 100 mM | 100 mM | 100 mM | 90 mM |
| arginine | 190 mM | 190 mM | 190 mM | 171 mM |

In each of FIGS. 2 and 3, the thin line indicates the measured electropherogram and the heavy line indicates variations in absorbance obtained by processing the electropherogram. The X-axis indicates electrophoresis time (sec), the Y-axis (left side) indicates the measured absorbance (mAbs), and the Y-axis (right side) indicates absorbance per unit time (mAbs/sec) obtained by processing the measured absorbance. Further, the terms "u-HbA1c", "s-HbA1c", and "HbA0" in FIGS. 2 and 3 indicate peaks of unstable HbA1c, stable HbA1c, and HbA0, respectively. Microsoft® Excel was used to convert the electropherogram into the graph showing the variations in absorbance.

As shown in FIG. 2, the method of Example 1 allowed not only the clear separation of HbA1c and HbA0 from each other but also the clear separation of stable HbA1c from unstable HBA1c. Further, as shown in FIGS. 2 and 3, since each peak of the electropherogram of Example 1 is more sharp (narrow peak width) than each peak of the electropherogram of Comparative Example 1, a clear improvement is seen in the separation capability of the method of Example 1 as compared with the method of Comparative Example 1.

Moreover, the method of Comparative Example 1 required 30 sec or more from the start of the electrophoresis until the peak of unstable HbA1c appeared and required 50 sec or more until the peak of HbA0 appeared. In contrast, with the method of Example 1, the peaks of unstable HbA1c and stable HbA1c appeared within 30 sec from the start of the electrophoresis and the peak of HbA0 appeared within 40 sec from the start of the electrophoresis. That is, the method of Example 1 allowed the separation of unstable HbA1c, stable HbA1c and HbA0 from each other in about 40 sec of electrophoresis. Therefore, the method of Example 1 allowed the separation of unstable HbA1c, stable HbA1c and HbA0 from each other in a short time with accuracy

### (Example 2)

In Example 2, the analyte was stable HbA1c. A measurement was performed in the same manner as Example 1 except that a hemoglobin solution containing stable HbA1c, HbA0, HbS and HbF and having a hemoglobin concentration of 100 g/L was used as a sample raw material. FIG. 4 shows an example of the obtained electropherogram. The hemoglobin solution used in Example 2 contained sucrose as an additive but did not contain the ion of a), the ion of b) or other ions described above. In Example 2, the ion concentrations of chondroitin sulfate, tartaric acid and arginine in the electrophoresis running buffer and those in the sample were the same as Example 1.

### (Comparative Example 2)

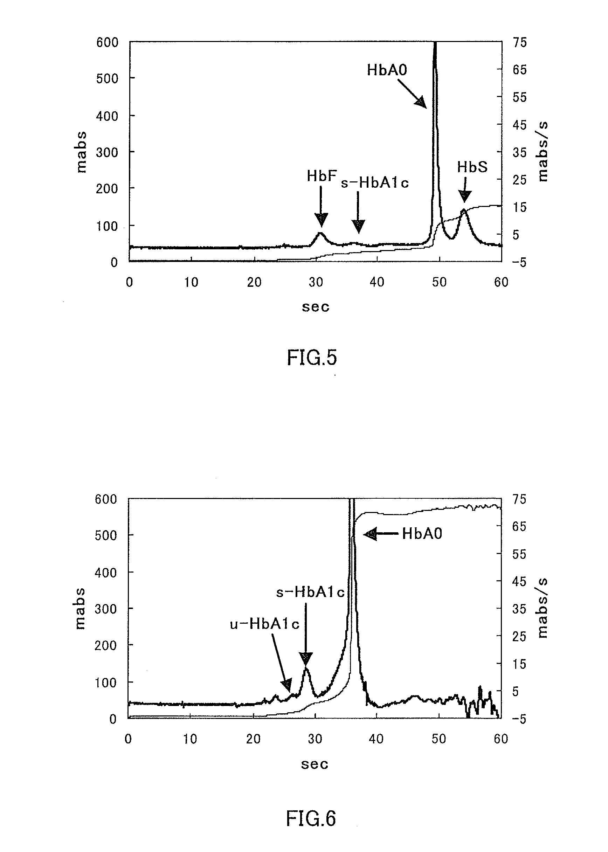

In Comparative Example 2, a measurement was performed in the same manner as Example 2 except that the electrophoresis running buffer (100 mmol/L of a L-taitaric acid solution containing 1.0 wt% of sodium chondroitin sulfate C (manufactured by Seikagaku corporation), 1 mM of NaN₃ and 0.01% of Triton™ X-100 and adjusted with L-argine to have a pH of 4.8) was used as a sample preparation solution. FIG. 5 shows an example of the obtained electropherogram. In Comparative Example 2, the ion concentrations of chondroitin sulfate, tartaric acid and arginine in the electrophoresis running buffer and those in the sample were the same as Comparative Example 1.

In each of FIGS. 4 and 5, the thin line indicates the measured electropherogram and the heavy line indicates variations in absorbance obtained by processing the electropherogram. Further, the terms "HbF', "s-HbA1c", "HbA0" and "HbS" in FIGS. 4 and 5 indicate peaks of the respective hemoglobins. As shown in FIG. 4, the method of Example 2 allowed the separation of HbF, stable HbA1c, HbA0 and HbS from each other. Further, as shown in FIGS. 4 and 5, each peak of the electropherogram of Example 2 is more sharp and appeared more clearly than each peak of the electropherogram of Comparative Example 2. Thus, a clear improvement is seen in the separation capability of the method of Example 2 as compared with the method of Comparative Example 2.

Moreover, with the method of Example 2, the time required in the separation was small as shown in FIGS. 4 and 5. Specifically, HbA0 was detected after 40 sec and HbS was detected after 45 sec from the start of the electrophoresis. In other words, the method of Example 2 allowed the separation of HbF, unstable HbA1c, HbA0 and HbS from each other in about 45 sec of electrophoresis. Thus, the method of Example 2 allowed the separation of HbF, unstable HbA1c, HbA0 and HbS from each other in a short time with accuracy.

### (Example 3)

A measurement was performed in the same manner as Example 1 except that blood from a normal subject was used as a sample raw material. FIG. 6 shows an example of the obtained electropherogram. In Example 3, the concentrations of chondroitin sulfate, tartaric acid and arginine in the electrophoresis running buffer and those in the sample were the same as Example 1.

In FIG. 6, the thin line indicates the measured electropherogram and the heavy line indicates variations in absorbance obtained by processing the electropherogram. Further, the terms "u-HbA1c", "s-HbA1c" and "HbA0" in FIG. 6 indicate peaks of the respective hemoglobins. As shown in FIG. 6, the method of Example 3 allowed the separation of unstable HbA1c, stable HbA1c and HbA0 from each other in the hemolyzed sample obtained by hemolyzing the blood from a normal subject. Furthermore, as shown in FIG. 6, the method of Example 3 allowed the separation in a short time.

### (Example 4)

In Example 4, electrophoresis was performed as follows. Cl ion contained in whole blood was added to an electrophoresis running solution to bring the ion concentrations of chondroitin sulfate, tartaric acid, and Cl to be substantially the same between the electrophoresis running solution and the sample. In Example 4, a measurement was performed in the same manner as Example 3 except that the following electrophoresis running buffer was used. Note that chondroitin sulfate, tartaric acid, and Cl correspond to the "ion that moves in the opposite direction to the analyte (the ion of b))."

### [Electrophoresis Running Buffer]

100 mmol/L of a L-tartaric acid solution containing 1.0 wt% of sodium chondroitin sulfate C (manufactured by Seikagaku corporation), 1 mM of NaN₃ and 0.01% of Triton™ X-100 and adjusted with L-argine to have a pH of 4.8 was used as the electrophoresis running buffer.

Table 2 provides the ion concentrations of chondroitin sulfate, tartaric acid, arginine and Cl in the electrophoresis running buffer and those in the sample. According to the measurement results, similarly to Example 3, the method of Example 4 allowed the separation of unstable HbA1c, stable HbA1c and HbA0 from each other in the hemolyzed sample obtained by hemolyzing the blood from a normal subject. Furthermore, the method allowed the separation in a short time.

| (Table 2) | Electrophoresis running buffer | Sample |
|---|---|---|
| chondroitin sulfate | 1.0 wt% | 1.0 wt% |
| tartaric acid | 100 mM | 100 mM |
| arginine | 190 mM | 190 mM |
| C1 | 10 mmol/L | ca. 10 mmol/L |

### (Example 5)

In Example 5, electrophoresis was performed as follows. Cl ion was added to a sample preparation solution and an electrophoresis running solution to bring the concentrations of chondroitin sulfate, tartaric acid, and Cl to be substantially the same between the electrophoresis running solution and the sample. In Example 5, a measurement was performed in the same manner as Example 4 except that the following sample was used. Note that chondroitin sulfate, tartaric acid, and Cl correspond to the "ion that moves in the opposite direction to the analyte (the ion of b))."

### [Sample]

111 mmol/L of a L-tartaric acid solution containing 1.11 wt% of sodium chondroitin sulfate C (manufactured by Seikagaku corporation), 1.1 mM of NaN₃, 0.011% of Triton™ X-100, and 11 mmol/L of NaCl and adjusted with L-argine to have a pH of 4.8 was prepared as a sample preparation solution. A hemoglobin solution having a hemoglobin concentration of 140 g/L was prepared as a sample raw material. A sample was prepared by diluting 0.01 ml of the sample raw material with 0.09 ml of the sample preparation solution (diluted by 10 times). Although the hemoglobin solution contained sucrose, it did not contain the ion of a), the ion of b) or other ions described above.

Table 3 provides the ion concentrations of chondroitin sulfate, tartaric acid, arginine and Cl in the electrophoresis running buffer and those in the sample. According to the measurement results, the method of Example 5 allowed, similarly to Example 1, not only the clear separation of HbA1c and HbA0 from each other but also the clear separation of HbA1c into unstable HbA1c and stable HbA1c. Furthermore, the method of Example 5 allowed the separation of unstable HbA1c, stable HbA1c and HbA0 from each other in a short time with accuracy.

| (Table 3) | Electrophoresis running buffer | Sample |
|---|---|---|
| chondroitin sulfate | 1.0 wt% | 1.0 wt% |
| tartaric acid | 100 mM | 100 mM |
| arginine | 190 mM | 190 mM |
| C1 | 10 mmol/L | 10 mmol/L |

### (Example 6)

In Example 6, electrophoresis was performed as follows. Freeze-dried hemoglobin dissolved in purified water was used as a sample raw material, and Cl ion was added to an electrophoresis running solution to bring the ion concentrations of chondroitin sulfate, tartaric acid, and Cl to be substantially the same between the electrophoresis running solution and the sample. In Example 6, a measurement was performed in the same manner as Example 4 except that the following sample was used. Note that chondroitin sulfate, tartaric acid, and Cl correspond to the "ion that moves in the opposite direction to the analyte (the ion of b)):"

### [Sample]

The same sample preparation as in Example 1 was prepared. Further, a solution having a hemoglobin concentration of 140 g/L and containing 100 mmol/L of NaCI was prepared as the sample raw material by adding 1 mL of purified water to freeze-dried hemoglobin as a freeze-dried hemolyzed sample. A sample was prepared by diluting 0.01 ml of the sample raw material with 0.09 ml of the sample preparation solution (diluted by 10 times).

Table 4 provides the ion concentrations of chondroitin sulfate, tartaric acid, arginine and Cl in the electrophoresis running buffer and those in the sample. As a result of the measurement, the method of Example 6 allowed, similarly to Example 1, not only the clear separation of HbA1c and HbA0 from each other but also the clear separation of HbA1c into unstable HbA1c and stable HbA1c. Further, the method of Example 6 allowed the separation of unstable HbA1c, stable HbA1c and HbA0 from each other in a short time with accuracy.

| (Table 4) | Electrophoresis running buffer | Sample |
|---|---|---|
| chondroitin sulfate | 1.0 wt% | 1.0 wt% |
| tartaric acid | 100 mM | 100 mM |
| arginine | 190 mM | 190 mM |
| CI | 10 mmol/L | 10 mmol/L |

### (Example 7)

In Example 7, variant Hb (HbF, HbS and HbA2) was detected by capillary electrophoresis.

### [Electrophoresis Running Buffer]

A solution containing 200 mM of tricine and 15 mM of 1,4-diaminobutane and adjusted with NaOH to have a pH of 9.4 was used as an electrophoresis running buffer.

### [Sample]

A solution containing 222 mM of tricine and 16.7 mM of 1,4-diaminobutane and adjusted with NaOH to have a pH of 9.4 was prepared as a sample preparation solution. A hemoglobin solution having a hemoglobin concentration of 80 g/L was prepared as a sample raw material by dissolving LyphocheckA2 control (manufactured by Bio-Rad Laboratories, Inc.) containing HbA, HbA2, HbF and HbS in purified water. A sample was prepared by diluting 0.01 ml of the sample raw material with 0.09 ml of the sample preparation solution (diluted by 10 times). That is, the sample was prepared such that the concentration of tricine became 200 mmol/L. Table 5 provides the concentrations of tricine and 1,4-diaminobutane in the electrophoresis running buffer and those in the sample. Note that tricine corresponds to the "ion that moves in the opposite direction to the analyte (the ion of b)):"

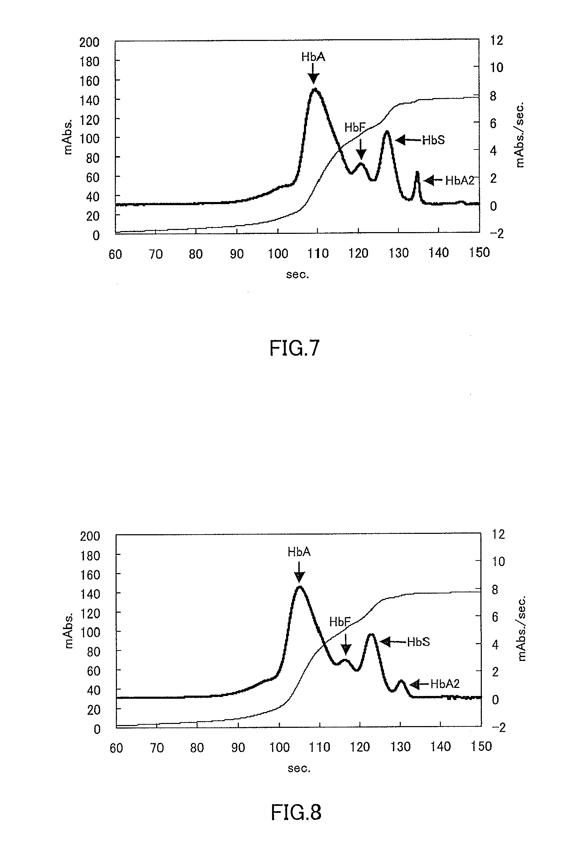

Using the electrophoresis running buffer and the sample described above, electrophoresis was performed in the same manner as Example 1. FIG. 7 shows an example of the obtained electropherogram.

In FIG. 7, the thin line indicates the measured electropherogram and the heavy line indicates variations in absorbance obtained by processing the electropherogram. Further, the terms "HbA", "HbF", "HbS" and "HbA2" in FIG. 7 indicate peaks of the respective hemoglobins. As shown in FIG. 7, the method of Example 7 allowed the separation of variant hemoglobins such as HbF, HbS and HbA2 from each other in a short time with accuracy.

### (Comparative Example 3)

As Comparative Example 3, variant Hb was measured by capillary electrophoresis in the same manner as Example 7 except that the following sample was used. FIG. 8 shows as an example of the obtained electropherogram. Table 5 provides the concentrations of tricine and 1,4-diaminobutane in the electrophoresis running buffer and those in the sample.

### [Sample]

A solution containing 200 mM of tricine and 15 mM of 1,4-diaminobutane and adjusted with NaOH to have a pH of 9.4 was prepared as a sample preparation solution. A hemoglobin solution having a hemoglobin concentration of 80 g/L was prepared as a sample raw material by dissolving Lyphocheck A2 control (manufactured by Bio-Rad Laboratories, Inc.) containing HbA, HbA2, HbF and HbS in purified water. A sample was prepared by diluting 0.01 ml of the sample raw material with 0.09 ml of the sample preparation solution (diluted by 10 times). That is, the sample was prepared such that the concentration of tricine became 180 mmol/L.

| (Table 5) | Example 7 | | Comparative Example 3 | |
|---|---|---|---|---|
| | Electrophoresis running buffer | Sample | Electrophoresis running buffer | Sample |
| tricine | 200 mmol/L | 200 mmol/L | 200 mmol/L | 180 mmol/L |
| 1,4-diaminobutane | 15 mM | 15 mM | 15 mM | 13.5 mM |

In FIG. 8, the thin line indicate the measured electropherogram and the heavy line indicates variations in absorbance obtained by processing the electropherogram. Further, the terms "HbA", "HbF", "HbS" and "HbA2" in FIG. 8 indicate peaks of the respective hemoglobins.

As shown in FIGS. 7 and 8, each peak of the electropherogram of Example 7 has a narrower width than that of the electropherogram of Comparative Example 3, meaning that the respective hemoglobins were separated from each other with an excellent degree of separation. Thus, an improvement is seen in the separation capability of the method of Example 7 as compared with the method of Comparative Example 3.

### (Example 8)

In Example 8, serum protein was detected by capillary electrophoresis.

### [Electrophoresis Running Buffer]

A solution containing 150 mM of glycine was adjusted with NaOH to have a pH of 10.0.

### [Sample]

A solution containing 167 mM of glycine and adjusted with NaOH to have a pH of 10.0 was prepared as a sample preparation solution. A solution having an albumin concentration of 40 g/L was prepared as a sample raw material. A sample was prepared by diluting 0.01 ml of the sample raw material with 0.09 ml of the sample preparation solution (diluted by 10 times). That is, the sample was prepared such that the concentration of glycine became 150 mmol/L. Table 6 provides the concentration of glycine in the electrophoresis solution and that in the sample. Note that glycine corresponds to the "ion that moves in the opposite direction to the analyte (the ion of b))."

Except detecting absorbance at 280 nm, electrophoresis was performed in the same manner as Example 1.

### (Comparative Example 4)

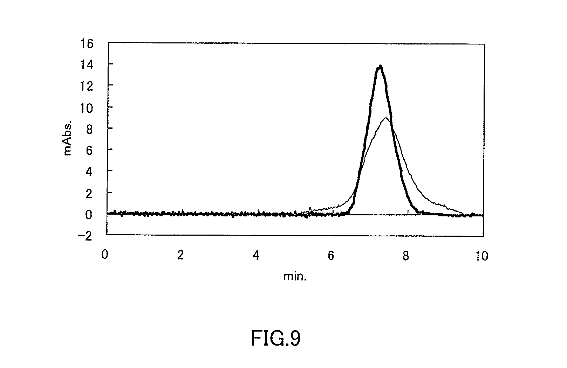

As Comparative Example 4, variant Hb was measured by capillary electrophoresis in the same manner as Example 8 except that the electrophoresis running buffer (solution containing 150 mM of glycine, pH: 10.0) was used as a sample preparation. FIG. 9 shows an example of the obtained electropherogram together with the results of Example 8. Table 6 provides the concentration of glycine in the electrophoresis running buffer and that in the sample.

| (Table 6) | Example 8 | | Comparative Example 4 | |
|---|---|---|---|---|
| | Electrophoresis running buffer | Sample | Electrophoresis buffer running buffer | Sample |
| glycine | 150 mmol/L | 150 mmol/L | 150 mmol/L | 135 mmol/L |

FIG. 9 is a graph showing variations in absorbance obtained by processing the electropherogram. The heavy line indicates Example 8 and the thin line indicates Comparative Example 4. As shown in FIG. 9, the electropherogram of Example 8 (heavy line) has a narrower peak than the electropherogram of Comparative Example 4 (thin line), meaning that serum protein (albumin) was separated with an excellent degree of separation. Therefore, an improvement is seen in the separation capability of the method of Example 8 as compared with the method of Comparative Example 4.

The sample analysis method of the present invention is useful in a variety of fields such as the medical field, the field of clinical testing, and the field of treatment/prevention of diabetes.

## Claims

1. A method for analyzing a sample by electrophoresis using an electrophoresis apparatus comprising a channel and a sample reservoir formed in the channel, the method comprising:
adding the sample to the sample reservoir of the electrophoresis apparatus where the channel contains an electrophoresis running buffer; and
performing electrophoresis by applying a voltage to both ends of the channel,
wherein the concentration of at least one of a) and b) is set to be approximately the same between the sample and the electrophoresis running buffer; wherein a) and b) are defined as follows:
a) an ion that moves in the same direction as an analyte in the sample by the electrophoresis and has a smaller degree of mobility than the analyte, and
b) an ion that moves in the opposite direction to the analyte.

2. The method according to claim 1, wherein the concentrations of a) and b) are set to be approximately the same between the sample and the electrophoresis running buffer.

3. The method according to claim 1 or 2, wherein, during the electrophoresis, ions sufficiently close to the sample in the channel are in approximately the same state as the sample added to the sample reservoir.

4. The method according to any one of claims 1 to 3, wherein the channel is a capillary and the electrophoresis is capillary electrophoresis.

5. The method according to any one of claims 1 to 4, wherein the sample contains hemoglobin.

6. The method according to any one of claims 1 to 5, wherein the sample contains hemoglobin A1c.

7. The method according to claim 6, which comprises measuring hemoglobin A1c.

8. A measurement kit comprising:
an electrophoresis running buffer;
a sample preparation solution for preparing a sample; and
an instruction manual describing preparing the sample using the sample preparation solution such that the concentration of at least one of a) and b) becomes approximately the same between the electrophoresis running buffer and the preparing sample; wherein a) and b) are defined as follows:
a) an ion that moves in the same direction as an analyte in the sample by the electrophoresis and has a smaller degree of mobility than the analyte, and
b) an ion that moves in the opposite direction to the analyte.

9. The kit according to claim 8, further comprising an electrophoresis chip,
wherein the electrophoresis chip includes a sample reservoir, an electrophoresis running buffer reservoir and a channel, and the sample reservoir and the electrophoresis running buffer reservoir are in communication with each other via the channel.

10. The kit according to claim 8 or 9, further comprising a calibration material and/or control material.

11. The kit according to any one of claims 8 to 10, wherein said instruction manual describes preparing the sample using the sample preparation solution such that the concentrations of a) and b) are set to be approximately the same between the sample and the electrophoresis running buffer.

12. The kit according to any one of claims 8 to 11, wherein the sample contains hemoglobin, preferably hemoglobin A1c.

13. A method for preparing a sample for analysis by a method according to claim 1, comprising preparing the sample such that the concentration of at least one of a) and b) becomes approximately the same between an electrophoresis running buffer used for electrophoresis and the preparing sample; wherein a) and b) are defined as follows:
a) an ion that moves in the same direction as an analyte in the sample by the electrophoresis and has a smaller degree of mobility than the analyte, and
b) an ion that moves in the opposite direction to the analyte.

14. The method according to claim 13, wherein the concentrations of a) and b) are set to be approximately the same between the sample and the electrophoresis running buffer.

15. The method according to claim 13 or 14, wherein the sample contains hemoglobin, preferably hemoglobin A1c.
